# EUROPEAN PATENT SPECIFICATION

(11) **EP 2 511 583 B1**
(45) Date of publication and mention of the grant of the patent: **30.03.2016**
(21) Application number: 12164040.3
(22) Date of filing: 13.04.2012
(51) Int. Cl.: F16L 37/084, F16L 37/091

(54) **Fitting structure, pipe fitting and pipe layout header**
Fittingsstruktur, Rohrfitting und Rohrauslegungskopf
Structure de raccord, raccord de tuyau et tête de disposition de tuyau

(30) Priority: 14.04.2011 JP 2011089994; 14.04.2011 JP 2011089995
(43) Date of publication of application: 17.10.2012
(73) Proprietor: Bridgestone Corporation, Tokyo 104-0031 (JP)
(72) Inventor: Nagayama, Tomohisa, Yokohama-shi, Kanagawa 244-0812 (JP); Sakurada, Akiyoshi, Yokohama-shi, Kanagawa 244-0812 (JP)
(74) Representative: Oxley, Robin John George

(56) References cited:
- EP-A1- 0 226 553
- WO-A2-2006/099155
- DE-U1-202004 010 967
- US-A- 3 447 819
- US-A- 4 313 331

## Description

### BACKGROUND OF THE INVENTION

### Field of the Invention

The present invention relates to a pipe layout header that branches in-flowing fluid, a pipe fitting for configuring a pipe layout header by connecting together plural pipe fittings, and a fitting structure for configuring a pipe fitting.

### Description of the Related Art

Pipe layout headers are recently being employed configured by connecting together plural pipe fittings having straight flow paths and branch flow paths branching off from the straight flow paths. The header structure of Japanese Patent Application Laid-Open (JP-A) No. 2007-100807 is configured by connecting together plural header units wherein an inner tube formed to an end portion of a header unit is inserted into a tube body formed at an end portion of another header unit using one-touch connection.

However, since it is not possible to release the connection between respective header units, the configuration of the header structure cannot be changed once it has been assembled. For example, in a case where it becomes necessary to change the configuration of a header structure at the site where the pipe layout headers are installed, a new header unit has to be manufactured at the factory as it is not possible to for example remove or change the order of header units on-site.

Reference is made to WO2006099155 which discloses a pipe according to the preamble of claim 1.

### SUMMARY OF THE INVENTION

In consideration of these circumstances, an object of the present invention is to provide a pipe fitting which is capable of connection and connection release, and a pipe layout header configured from such pipe fittings.

A fitting structure according to the invention is set out in Claim 1.

Preferred features are set out in claims 2-4.

A pipe fitting according to the invention is set out in Claim 5.

Preferred features are set out in claims 6-8.

A pipe layout header according to the invention is set out in Claim 9. Preferred features are set out in claims 10-12.

Due to having the configuration described above, the present invention can provide a pipe fitting which is capable of connection and connection release, and a pipe layout header configured from these pipe fittings.

### BRIEF DESCRIPTION OF THE DRAWINGS

A Reference embodiment and Exemplary embodiments of the present invention will be described in detail based on the following figures, wherein:
Fig. 1 is a perspective view illustrating a pipe layout header according to a reference embodiment;
Fig. 2 is a longitudinal cross-section illustrating a pipe layout header according to the first reference embodiment;
Fig. 3 is a longitudinal cross-section illustrating pipe fittings according to the first reference embodiment in a state prior to being connected;
Fig. 4 is a longitudinal cross-section illustrating pipe fittings according to the first reference embodiment in a connected state.
Fig. 5 is a longitudinal cross-section illustrating a state with a pulling-out force applied to an inner pipe of a pipe fitting according to the first reference embodiment;
Figs. 6A to 6C are longitudinal cross-sections illustrating a method for releasing connection between pipe fittings according to the first reference embodiment;
Figs. 7A and 7B are perspective views illustrating a method for releasing connection between pipe fittings according to the first reference embodiment;
Figs. 8A to 8D are transverse cross-sections illustrating notches on a pipe fitting according to the first reference embodiment;
Figs. 9A and 9B are perspective views illustrating pressing members according to the first reference embodiment;
Fig. 10 is a longitudinal cross-section illustrating a modified example of a pipe fitting according to the first reference embodiment;
Fig. 11 is a longitudinal cross-section illustrating an application example of a pipe fitting according to the first reference embodiment;
Fig. 12A and Fig. 12B are perspective views illustrating claw members and release rings of a connection mechanism applicable to a pipe fitting according to the first reference embodiment;
Fig. 13 is a cross-section illustrating a basic configuration of a fitting structure according to a first exemplary embodiment of the present invention during connection;
Fig. 14A is an external perspective view and Fig. 14B is a side view illustrating a basic configuration of a notch according to the first exemplary embodiment of the present invention;
Fig. 15A and Fig. 15B are external perspective views illustrating a release procedure of a fitting structure according to the first exemplary embodiment of the present invention;
Fig. 16A, Fig. 16B and Fig. 16C are cross-sections illustrating a release procedure of a fitting structure according to the first exemplary embodiment of the present invention;
Fig. 17A is an external perspective view and Fig. 17B is a side view illustrating a configuration of a notch according to a second exemplary embodiment of the present invention;
Fig. 18A is a cross-section illustrating a basic configuration of a notch according to a third exemplary embodiment of the present invention, and Fig. 18B is a plan view of a tool;
Fig. 19A, Fig. 19B, and Fig. 19C are external perspective views illustrating a release procedure of a fitting structure according to the third exemplary embodiment of the present invention;
Fig. 20 is a cross-section illustrating a basic configuration of a fitting structure according to a fourth exemplary embodiment of the present invention during connection;
Fig. 21 is a partial cross-section illustrating a basic configuration of a pipe fitting according to a fifth exemplary embodiment of the present invention when on its own;
Fig. 22 is an external perspective view illustrating a configuration of a pipe layout header of connected pipe fittings according to a sixth exemplary embodiment of the present invention; and
Figs. 23A and 23B are partial cross-sections illustrating a connection procedure of a pipe layout header according to the sixth exemplary embodiment of the present invention, with Fig. 23A illustrating a state prior to connection and Fig. 23B illustrating a state post-connection.

### DETAILED DESCRIPTION OF THE INVENTION

### Reference Embodiment

Explanation follows regarding a Reference embodiment which is not according to the present invention but which is included to aid understanding of the invention, with reference to the drawings. Explanation first follows regarding a pipe layout header and pipe fitting of the Reference embodiment.

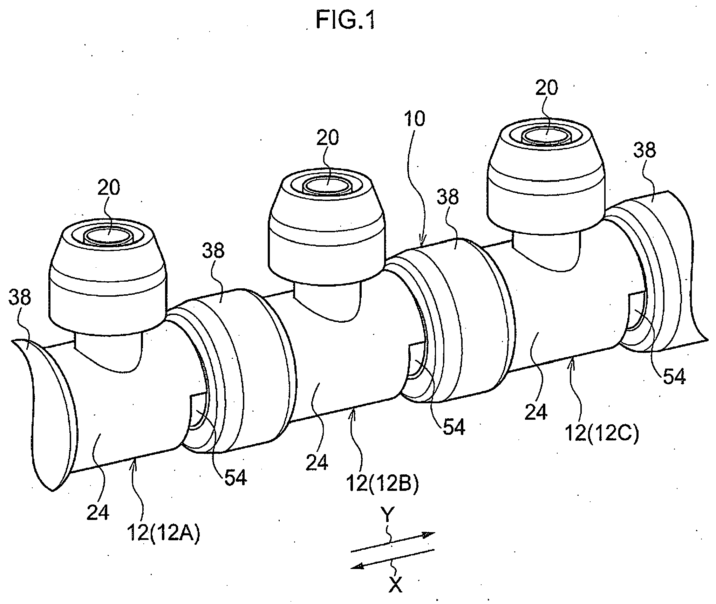

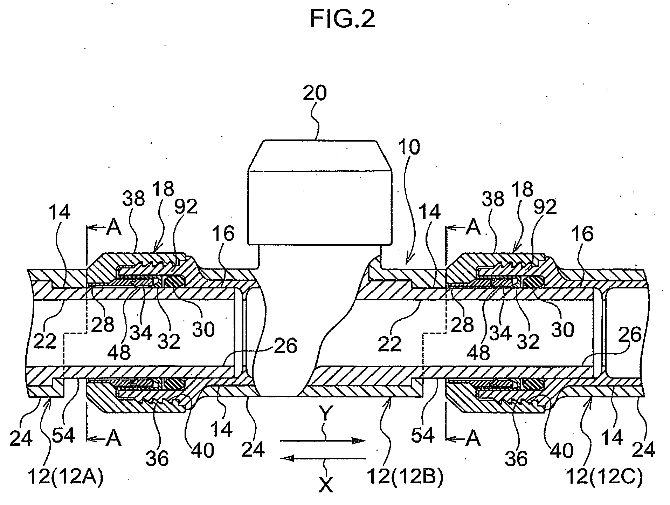

As shown in the perspective view of Fig. 1, a pipe layout header 10 is configured from plural connected header units 12 serving as pipe fittings. As shown in the longitudinal cross-section of Fig. 2, each of the header units 12 includes an inner pipe 14 serving as an inner pipe section, an outer covering resin 24 serving as an outer pipe section, a connection portion 18, and a branch opening 20.

Three header units 12 that have been connected together are illustrated in Fig. 1 and the longitudinal cross-section of Fig. 2. For ease of explanation, the header unit 12 disposed on the left hand side is referred to as header unit 12A, serving as a first pipe fitting, the header unit 12 disposed in the middle is referred to as header unit 12B, and the header unit 12 on the right hand side is referred to as header unit 12C, serving as the second pipe fitting.

The inner pipe 14 includes a straight flow path 22 along which a fluid such as cold or hot water flows. A branch flow path (not shown in the drawings) is provided in the inner pipe 14 branching off from the straight flow path 22 substantially orthogonal to the straight flow path 22. A pipe body such as a hot or cold water supply pipe or waste water pipe is detachably connected to the branch opening 20 configuring the outlet-inlet for fluid to flow in the branch flow path.

The connection portion 18 is configured including a tube portion 92 formed to a portion at one end of the inner pipe 14, and a cap 38 provided on the tube portion 92. Namely, the connection portion 18 is formed at a first end portion of the inner pipe 14. A second end portion 16 of the inner pipe 14 is exposed at the outer face (outer periphery) of the central portion of the inner pipe 14 (in the vicinity of the intersection between the straight flow path 22 and the branch flow path) and covered by the outer covering resin 24.

A male thread 36 is formed to the outer peripheral face of the tube portion 92 and the cap 38 formed in a circular cylindrical shape is attached to the tube portion 92 by screwing the male thread 36 into a female thread 40 formed to the inner peripheral face of the cap 38.

An O-ring 30, a support ring 32 and a collet 34 serving as a releasing member are provided along the inner wall of the tube portion 92, in sequence from an opening 26 formed to the second end portion 16 of the inner pipe 14 towards an opening 28 of the cap 38. In the following explanation the direction from the opening 26 towards the opening 28 with respect to the component axis of the inner pipe 14 is referred to as direction X, and the direction from the opening 28 towards the opening 26 is referred to as direction Y (the opposite direction to direction X). The O-ring 30, the support ring 32 and the collet 34 are ring shaped members.

The O-ring 30 makes contact with the outer peripheral face of the inner pipe 14 when the second end portion 16 of the inner pipe 14 of a first of the header units 12 has been inserted into the tube portion 92, thereby securing a watertight connection portion between the inner pipe 14 and the connection portion 18 (such that fluid does not flow out from the connection portion of the inner pipe 14 and the connection portion 18).

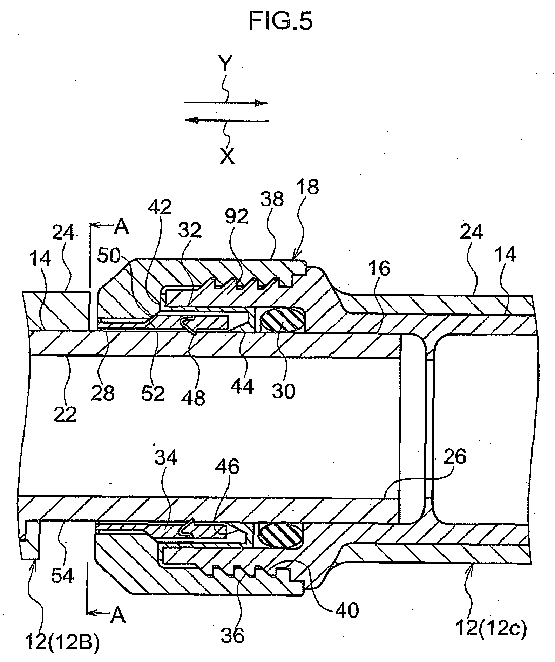

As shown in the longitudinal cross-section of Fig. 5, a flange portion 42 is formed at an end portion on the opening 28 side of the support ring 32, projecting out towards the radial direction outside of the support ring 32. A flange portion 44 is formed at an end portion on the O-ring 30 side of the support ring 32, projecting out towards the radial direction inside of the support ring 32.

The support ring 32 is fixed to the tube portion 92 such that the flange portion 42 of the support ring 32 is sandwiched between an end portion of the tube portion 92 and the cap 38 attached to the tube portion 92.

The flange portion 44 is disposed between the O-ring 30 and the collet 34, and the leading end portion of the flange portion 44 is formed in a wedge shape with a taper portion 46 that slopes towards the support ring 32 radial direction inside on progression in direction X.

The collet 34 is provided so as to be moveable in the X direction and the Y direction, and the collet 34 can be expanded or contracted in the collet 34 radial direction due to plural slits (not shown in the drawings) being formed in the collet 34 along the member axial direction. Plural claw members 48 serving as retaining members are provided to the collet 34 around the circumferential direction, projecting out from the inner peripheral face of the collet 34 towards the radial direction inside. The claw members 48 project out towards the collet 34 radial direction inside on progression in the Y direction. Namely the claw members 48 are provided as retaining members to the inner wall of the tube portion 92.

A tapered portion 50 is formed in the vicinity of an X direction intermediate portion of the outer peripheral face of the collet 34, such that the outer diameter of the collet 34 decreases on progression in the X direction. A tapered portion 52 facing the tapered portion 50 is formed on the inner peripheral face of the cap 38.

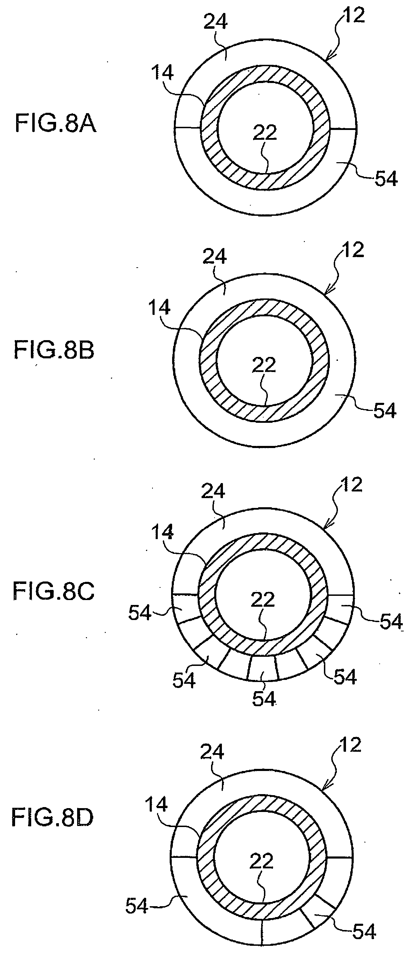

A single notch 54 is formed where a portion of the outer covering resin 24 is notched. As shown in Fig. 8A illustrating the cross-section taken on A-A of Fig. 2, the notch 54 is formed in a semi-circular arc shape where the bottom half of the outer covering resin 24 has been notched. A pressing member 56, described later, is inserted into the notch 54.

Explanation follows regarding connection and connection release of the header units of the Reference embodiment. The following explanation describes connection and connection release for the header unit 12B and the header unit 12C, however connection and connection release is similar for other header units.

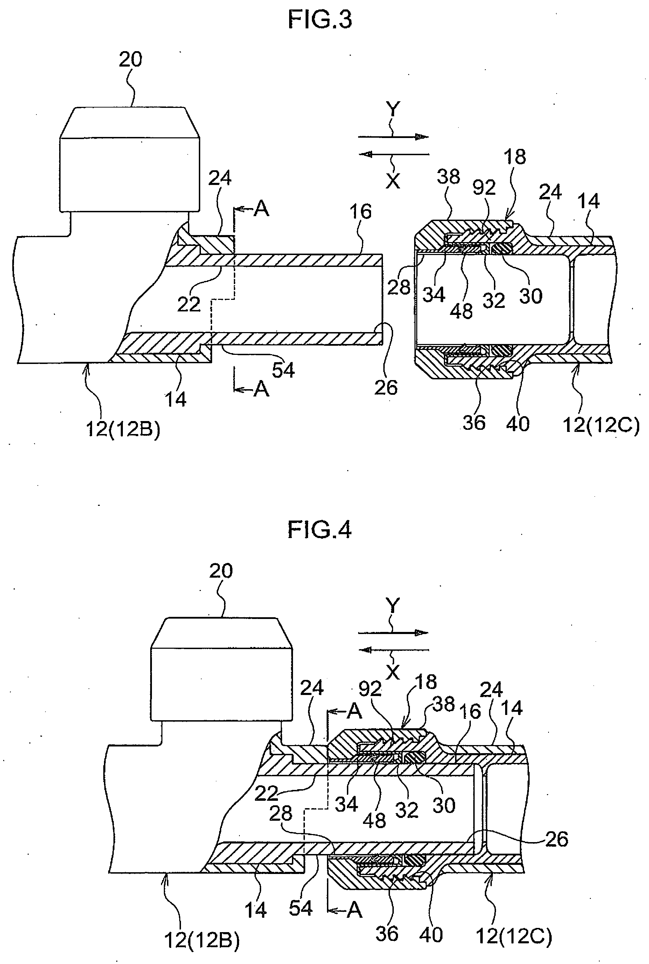

As shown in Fig. 3, when the second end portion 16 of the inner pipe 14 of the header unit 12B is inserted in the direction Y into the connection portion 18 of the header unit 12C, the claw members 48 of the collet 34 make contact with the outer peripheral face of the inner pipe 14, and the collet 34 moves together with the inner pipe 14 in direction Y, as shown in the longitudinal cross-section of Fig. 4. The end portion of the collet 34 accordingly slides up over the taper portion 46 of the support ring 32, expanding the diameter of the collet 34 in the radial direction. Force pressing the claw members 48 against the outer peripheral face of the inner pipe 14 is thereby decreased, and the second end portion 16 of the inner pipe 14 can be easily inserted into the connection portion 18.

As shown in Fig. 5, the inner pipe 14 moves in the X direction when fluid flowing in the inner pipe 14 (the straight flow path 22) presses the inside of the inner pipe 14 (the straight flow path 22) or when force attempting to pull the inner pipe 14 out from the connection portion 18 acts, such as when the header unit 12B is tugged. The end portion of the collet 34 accordingly slides down over the taper portion 46 of the support ring 32, decreasing the diameter of the collet 34 in the radial direction. The force pressing the claw members 48 against the outer peripheral face of the inner pipe 14 accordingly increases. The second end portion 16 of the inner pipe 14 can thereby be prevented from coming out from the connection portion 18 and the second end portion 16 of the inner pipe 14 can be retained in the connection portion 18.

However when force attempting to pull the inner pipe 14 out from the connection portion 18, the collet 34 moves further in the X direction, and the tapered portion 50 of the collet 34 slides against the tapered portion 52 of the cap 38. The diameter of the collet 34 in the radial direction thereby decreases, and the force pressing the claw members 48 against the outer peripheral face of the inner pipe 14 increases, such that the claw members 48 dig into the outer peripheral face of the second end portion 16. The second end portion 16 of the inner pipe 14 can thereby be prevented from coming out from the connection portion 18 and the second end portion 16 of the inner pipe 14 can be retained in the connection portion 18

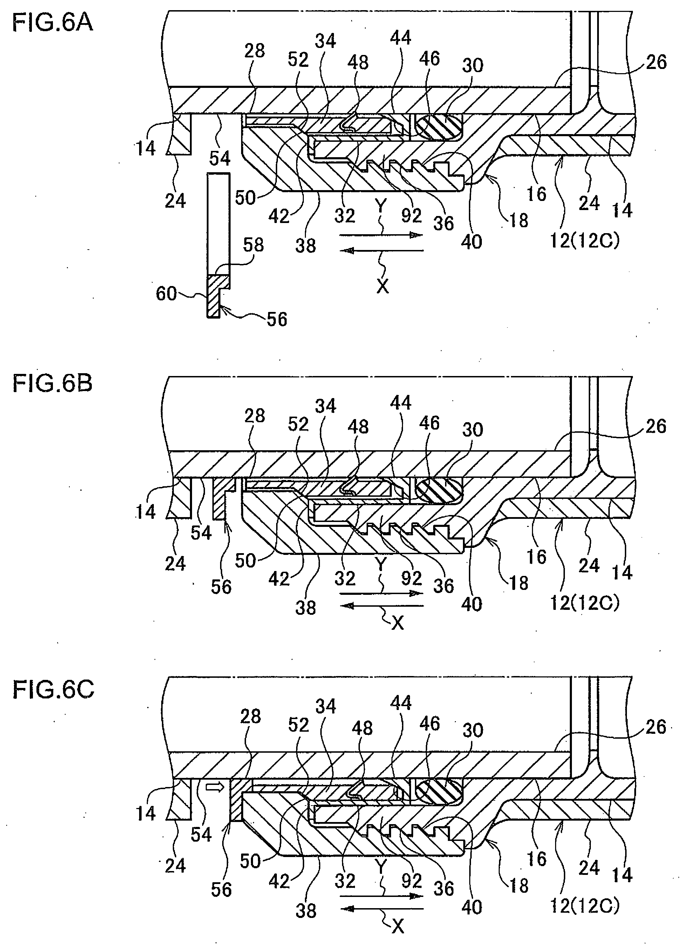

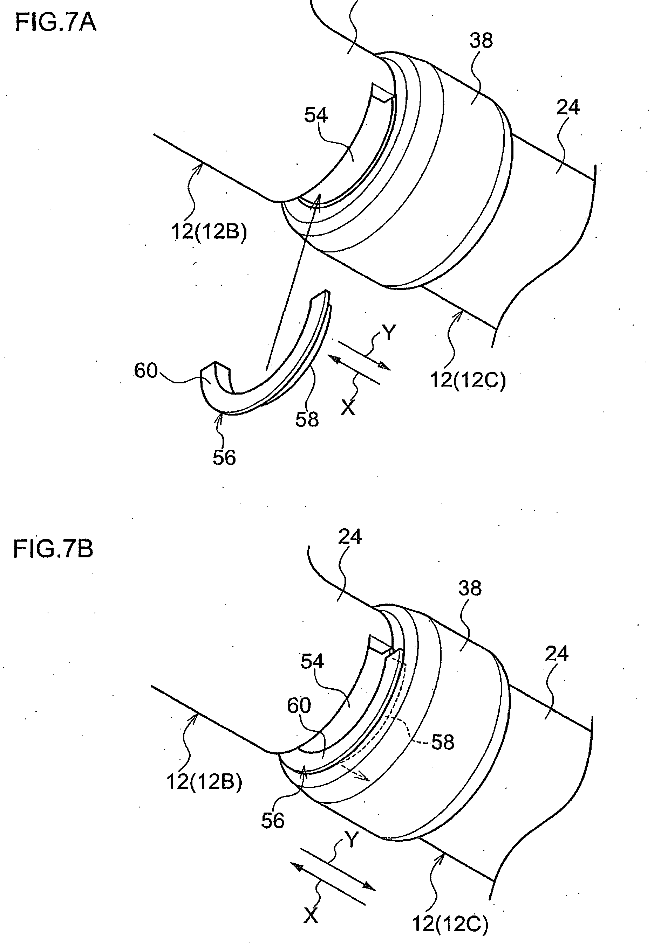

In order to pull the second end portion 16 of the inner pipe 14 of the header unit 12B out from the connection portion 18 of the header unit 12C when removing the header unit 12B from the header unit 12C, first, as shown in the longitudinal cross-section of Fig. 6A and the perspective view of Fig. 7A, the pressing member 56 is inserted into the notch 54. The pressing member 56 is thereby disposed in front of the collet 34 as shown in the longitudinal cross-section of Fig. 6B. As shown in Fig. 6A and Fig. 7A, the pressing member 56 is configured by a semicircular shaped circular arc cross-sectioned plate portion 58 and a flange portion 60 provided protruding out towards the radial direction outside from an end portion of the plate portion 58.

Then, as shown in Fig. 6C and the perspective view of Fig. 7B, the pressing member 56 is pressed in along the Y direction such that the end face of the plate portion 58 contacts the end face of the collet 34, and presses the collet 34 in (in the Y direction) towards the far side of the tube portion 92. Due to the collet 34 thereby moving in the Y direction the end portion of the collet 34 slides up over the taper portion 46 of the support ring 32, and so the diameter of the collet 34 increases in the radial direction. The force pressing the claw members 48 against the outer peripheral face of the inner pipe 14 is thereby eliminated, and a state is achieved in which the second end portion 16 of the inner pipe 14 of the header unit 12B is able come out from the connection portion 18 of the header unit 12C. Namely, the retained state in which the claw members 48 prevent the second end portion 16 of the inner pipe 14 coming out from the connection portion 18 is released.

In the header units 12, in a state in which the inner pipe 14 of the header unit 12B (the second end portion 16) is inserted into the connection portion 18 of the header unit 12C and retained by the claw members 48 of the header unit 12C, the notch 54 is provided between a first end portion of the outer covering resin 24 of the header unit 12B and the connection portion 18 of the header unit 12C (the cap 38) as a space in which the collet 34 can be operated.

Explanation follows regarding operation and advantageous effects of the pipe layout header and header units of the Reference embodiment.

As shown in Fig. 3 and Fig. 4, the header unit 12B and the header unit 12C can be connected together by inserting the second end portion 16 of the inner pipe 14 of the header unit 12B into the connection portion 18 of the header unit 12C so as to be retained by the claw members 48 of the header unit 12C.

As shown in Fig. 6A to Fig. 6C, the state in which the claw members 48 prevent the second end portion 16 of the inner pipe 14 inserted into the connection portion 18 from coming out is released by inserting the pressing member 56 into the notch 54, disposing the pressing member 56 in front of the collet 34, and using the pressing member 56 to press the collet 34 in (in the Y direction) towards the far side of the tube portion 92. The connection between the header unit 12B and the header unit 12C can accordingly be released. Namely, the retained state of the second end portion 16 of the inner pipe 14 due to the claw members 48 of the header unit 12C is released by utilizing the space of the notch 54 to operate the collet 34. Connection between the header unit 12B and the header unit 12C can accordingly be released.

Since connection of the header units 12 and connection release of the header units 12 is thus enabled, when a need has arisen to change the configuration of the header structure of the pipe layout header 10 on the site installed with the pipe layout header 10, the number of header units 12 can be increased or decreased, and the sequence of the header units 12 can be changed. A reduction can accordingly be achieved in waste of header units 12 discarded due to becoming unusable due to changing the configuration of a header structure of the pipe layout header 10. An operator can accordingly perform connection operations of the header units 12 on site without the concern of connecting the header units 12 in the wrong configuration.

Delays to the program for on-site pipe laying due to requiring factory re-working can thus be prevented when an on-site change to the configuration of the header structure of the pipe layout header 10 is required.

Due to the presence of the notch 54 as a space in which the collet 34 serving as the release member can be operated, various sizes, placements and numbers of spaces can be configured at the first end portion of the outer covering resin 24.

Fluid flowing into the header units 12 can be branched due to the branch flow path branching from the inner pipe 14.

Pipe layout headers 10 can also be configured from various combinations of the header units 12 by performing plural connections of header units 12.

The Reference embodiment of the present invention is described above.

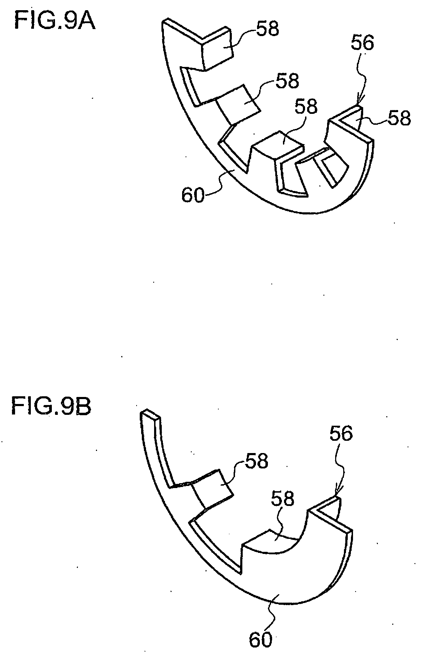

While in the Reference embodiment an example has been illustrated in which the notch 54 is formed with a semicircular arc shape, the notch 54 may be formed in any shape as long as a pressing member can be inserted and disposed in front of the collet 34, and the collet 34 can be pushed by the pressing member towards the far side of the connection portion 18. Plural notches 54 may also be formed around the circumferential direction of the outer covering resin 24. Configuration may be made with the notch 54 formed in a face-on view (cross-section taken on A-A of Fig. 2) circular shape around the entire circumference of the first end portion of the outer covering resin 24, as shown in the transverse cross-section of Fig. 8B, or with plural of the notches 54 formed along the circumferential direction of the first end portion of the outer covering resin 24, as shown in the transverse cross-sections of Fig. 8C and Fig. 8D. A pressing member 56 as illustrated in the perspective view of Fig. 9A may be employed in the case of the notches 54 illustrated in Fig. 8C. A pressing member 56 as illustrated in the perspective view of Fig. 9B may be employed in the case of the notches 54 illustrated in Fig. 8D.

A configuration in which "connection of the header units 12 cannot be released unless a pressing member 56 is employed capable of being inserted into plural notches 54 at the same time and pressing the collet 34 (unless plural notches 54 are utilized at the same time)" can be achieved by forming plural of the notches 54 along the circumferential direction at the first end portion of the outer covering resin 24. Namely connection of the header units 12 can be prevented from being released unintentionally. Release of the connection of the header units 12 can also be restricted to designated personnel competent to release connections (to personnel capable of reliably connecting header units 12). Mistakes in connecting the header units 12 can be prevented by adopting such an approach since only such personnel (designated personnel) perform connection operations on the header units 12. Alternatively, release of the connection of the header units 12 can also be restricted to designated personnel competent to release connections of the header units 12 by blocking the notch 54 with a cover that cannot be removed without using a particular implement such as a pressing member.

In the Reference embodiment, an example has been illustrated in which the outer face of the inner pipe 14 serving as the inner pipe section is covered by the outer covering resin 24 serving as the outer pipe section. However, configuration may be made with a single component (referred to below as "fitting body") in which the outer covering resin 24 and the inner pipe 14 are integrated together such as by integral molding. In such cases the fitting body has an inner pipe section configured similarly to the inner pipe 14 and an outer pipe section configured similarly to the outer covering resin 24. Namely portions on the inside of the single component fitting body serve as the inner pipe section, and portions on the outside as the outer pipe section.

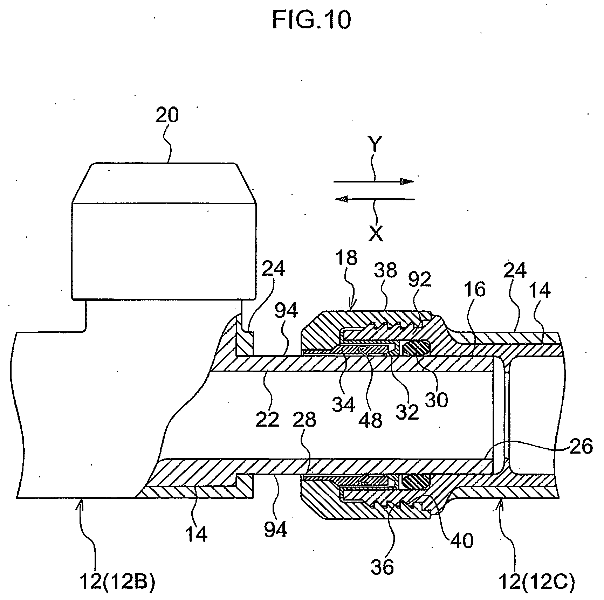

In the Reference embodiment, an example has been illustrated in which the notch 54 is formed by a notch in the outer covering resin 24. However, as shown in the longitudinal cross-section illustrated in Fig. 10, in the header units 12 in which only the inner pipe 14 positioned substantially below the branch opening 20 is covered by the outer covering resin 24, the length of the member axial direction of the second end portion 16 of the inner pipe 14 can be made longer such that, in a state in which the second end portion 16 of the inner pipe 14 of the header unit 12B is completely inserted into the connection portion 18 of the header unit 12C, a space is provided into which the pressing member 56 can be inserted and disposed in front of the collet 34 (the space 94 in which the collet 34 can be operated).

In the Reference embodiment explanation has been given of a case in which the claw members 48 are employed as a retaining member, and the collet 34 employed as a releasing member. However the Reference embodiment is applicable to any header unit including: a retaining member for preventing an end portion of an inner pipe section of one header unit that has been inserted into a connection portion of another header unit from coming out; and a releasing member for releasing a retaining member retained state of the inner pipe section by pressing the retaining member towards the far side connection portion.

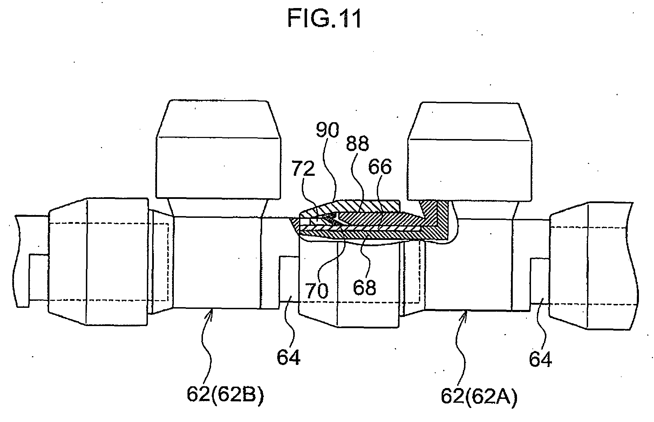

For example, a notch 64 may be provided in header units 62A, 62B of the configuration illustrated in the longitudinal cross-section of Fig. 11. In Fig. 11 a tube portion 68 of a header unit 62A is inserted into an internal pipe 66 of the header unit 62B serving as an inner pipe section, and the internal pipe 66 is covered in this state by a cover 88 serving as a connection portion. A claw member 70 serving as a retaining member is provided at the inside of a cap 90 fixed to the cover 88, thereby preventing the internal pipe 66 from coming out of the cover 88. A release ring 72 serving as a releasing member is provided at the inside of the cap 90. The release ring 72 is pushed towards the far side of the cover 88 by a pressing member (not shown in the drawings), releasing the retained state in which the claw member 70 prevents the internal pipe 66 from coming out from the cover 88.

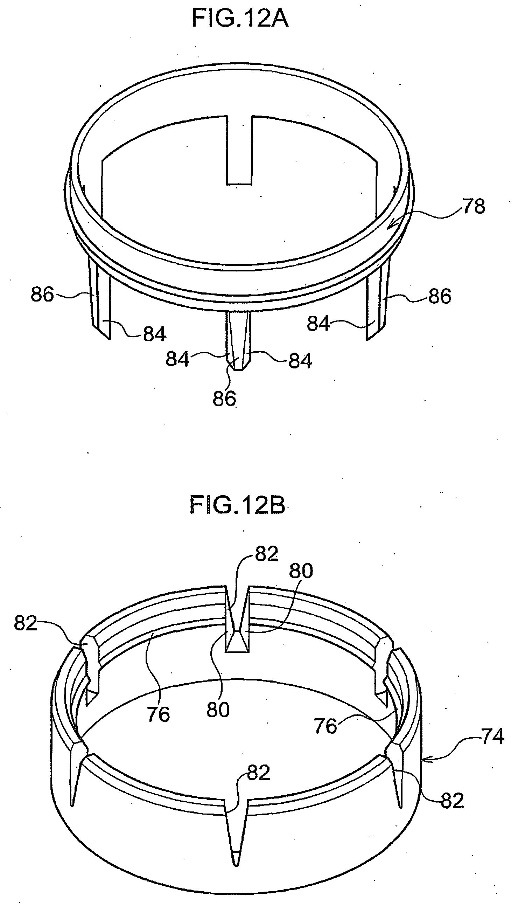

Configuration may also be made such that, as illustrated in the perspective view of Fig. 12A, claw members 76 are provided as retaining members to a circular cylindrical shaped collet 74, and a circular cylindrical shaped release ring 78 is provided as a releasing member, as shown in Fig. 12B. The collet 74, the claw members 76 and the release ring 78 are provided at the inner wall of a connection portion configuring a header unit.

The claw member 76 is provided so as to project out from the inner peripheral face of the collet 74. The collet 74 is formed with slits 82 that have tapered portions 80 formed along the member axial direction on the inner wall face of the collet 74. Projection members 86 that have tapered portions 84 are also provided so as to project out on the outer wall face of the release ring 78, downwards in Fig. 12A.

The release ring 78 and the collet 74 are provided at the inner wall of the connection portion configuring the header unit in a state in which the projection members 86 are inserted into the slits 82. Accordingly, when the release ring 78 is pressed by the pressing member towards the collet 74 (towards the far side of the connection portion), the tapered portions 84 of the projection members 86 press and slide against the tapered portions 80 of the slits 82, widening the slits 82 in the projection members 86. The diameter increases of the collet 74 in radial direction, the collet 74 is inserted into the connection portion of the header unit, and force pressing the claw member 76 against the outer peripheral face of the connected inner pipe section is eliminated.

Any number of the header units 12 of the Reference embodiment may be connected together. Plurals header units 12 for connecting together may also be of similar specification as each other, or may be of different specifications from each other, or some of the header units 12 may be of similar specification to each other and others different. Specification here refers to such factors as the length of the straight flow path, whether or not there is a branch flow path, the size of a branch opening (diameter of contactable pipe body), location of the branch opening and/or number branch openings.

The header units 12 of the Reference embodiment may be employed as pipe fittings for connecting pipe bodies to each other, for example pipes for hot or cold water or waste water. The header units 12 of the Reference embodiments can also be applied to various connection structures for connecting together pipe shaped members.

### First exemplary Embodiment

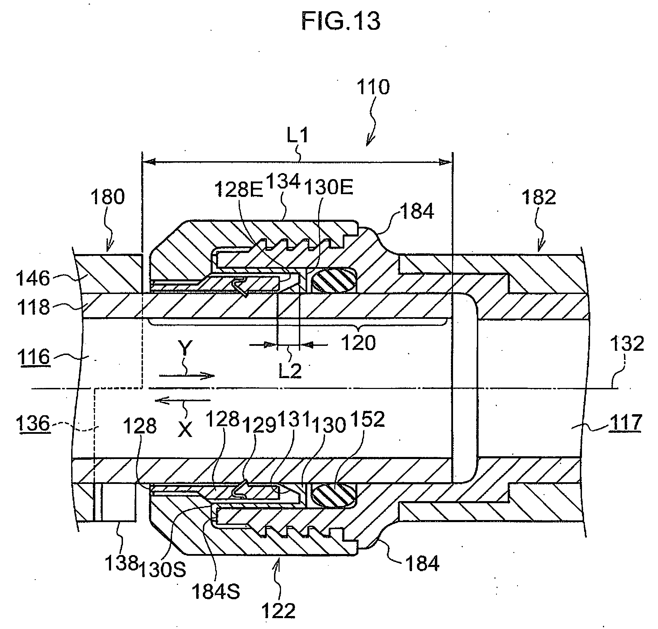

As shown in Fig. 13, a fitting structure 110 according to a first exemplary embodiment of the present invention includes a first pipe 180 and a second pipe 182, with the first pipe 180 and the second pipe 182 connected together with a one-touch fitting (connection portion) 122. The first pipe 180 has a double tube construction (multi-layer construction) including an inner tube (inner pipe) 118 formed with an internal first flow path 116, and an outer tube 146 surrounding the inner pipe 118. The inner pipe 118 is molded in a heat resistant resin or metal material, and the outer tube (outer covering resin) 146 is formed from a resin material. The taper portion 146 performs at least one role out of reinforcing the connection portion 118, protecting the connection portion 118, heat preservation, or improving the visual appearance of the connection portion 118.

A tube portion 120 is formed to an end portion of the first pipe 180. The tube portion 120 is a portion for insertion into the connection portion 122, and is provided over a range of length L1 from the leading end portion of the first pipe 180. The outer tube 146 is removed over the range of the tube portion 120.
An internal second flow path 117 is formed in the second pipe 182, and a wider diameter portion 184 is formed at an end portion of the second pipe 182. The internal diameter of the wider diameter portion 184 widened to a diameter for insertion of the tube portion 120 of the inner pipe 118. The wider diameter portion 184 is employed such that the connection portion 122 is configured for one-touch connection of the inserted tube portion 120.

The connection portion 122 has a collet 128 disposed at the inner peripheral face of the wider diameter portion 184. The collet 128 is formed from resin in a circular cylindrical shape and surrounds the outer peripheral face of the tube portion 120 that has been inserted in the arrow Y direction. Plural slits, not shown in the drawings, are provided in the circular cylindrical portion of the collet 128 along the axial line 132 direction. The slits are cut out from end portions 128E at one end of the collet 128 through to positions on the other side of the center portion of the circular cylindrical portion. The diameter of the collet 128 can accordingly be increased in the radial direction. A ring shaped claw member 129 is provided in the circular cylindrical portion of the collet 128.

The claw member 129 is incorporated around the circumferential direction at the circular cylindrical portion of the collet 128, and is segmented by the slit portions. The claw member 129 can accordingly be expanded in diameter interlocked to expanding the diameter of the collet 128.
A leading end of the claw member 129 is disposed so as to slope in the decreasing diameter direction on progression in the arrow Y direction and project out from the inner peripheral face of the collet 128. The claw member 129 permits the tube portion 120 to be inserted in the arrow Y direction, and surrounds and retains the outer peripheral face of the inserted tube portion 120. The claw member 129 also prevents the tube portion 120 from moving in the direction to come out (the arrow X direction). The connected state of the first pipe 180 and the second pipe 182 is thereby maintained.

A support ring 130 is disposed between the collet 128 and the wider diameter portion 184. The support ring 130 is formed in a circular cylindrical shape, and a circular cylindrical portion surrounds the outer peripheral face of the collet 128. A folded over portion 130S is formed to the end portion of the support ring 130 on the arrow X direction side, and the folded over portion 130S makes contact with the leading end portion 184S of the wider diameter portion 184. Movement of the support ring 130 in the arrow Y direction is thereby restricted. A sloping portion 131 is provided at an end portion 130E on the arrow Y direction side of the support ring 130. The sloping portion 131 slopes such that the diameter increases on progression in the arrow Y direction. The length of the sloping portion 131 in the axial line 132 direction is denoted L2.

The leading end of the sloping portion 131 contacts the arrow Y direction end portions 128E of the collet 128, and the end portions 128E of the collet 128 ride up the sloping portion 131 and expand in diameter when the collet 128 is moved distance L2 in the arrow Y direction. The circular cylindrical portion and the claw member 129 readily expand in diameter due to the slits provided at the end portion 128E side of the collet 128. As a result the separation distance between the collet 128 and the facing claw member 129 widens, releasing retaining of the tube portion 120, and enabling the first pipe 180 and the second pipe 182 to be separated from each other.

The outer peripheral face of the wider diameter portion 184 and a leading end portion 184S are surrounded by a cap 134. The cap 134 is made from resin (for example a polyacetal resin or glass fiber reinforced nylon) and the cap 134 fits over the outer peripheral face of the wider diameter portion 184 so as to be able to rotate in the circumferential direction. Accordingly at least a portion of each of the collet 128, the support ring 130 and the tube portion 120 is surrounded by the cap 134, thereby restricting both radial direction movement and axial line 132 direction movement of the collet 128 and the support ring 130. The cap 134 may be screwed on to mesh a female thread provided to the cap 134 with a male thread provided to the wider diameter portion 184.

An end portion 128S at the arrow X direction end of the collet 128 extends along the outer peripheral face of the tube portion 120 and fits into a gap between the tube portion 120 and the collet 128. The end portion 128S of the collet 128 is in substantially the same plane as an leading end 134S of the cap 134.
An O-ring 152 is also fitted at the arrow Y direction side of the support ring 130 between the wider diameter portion 184 of the leading end of the second pipe 182 and the tube portion 120 to prevent water from leaking.

Explanation follows regarding a notch.

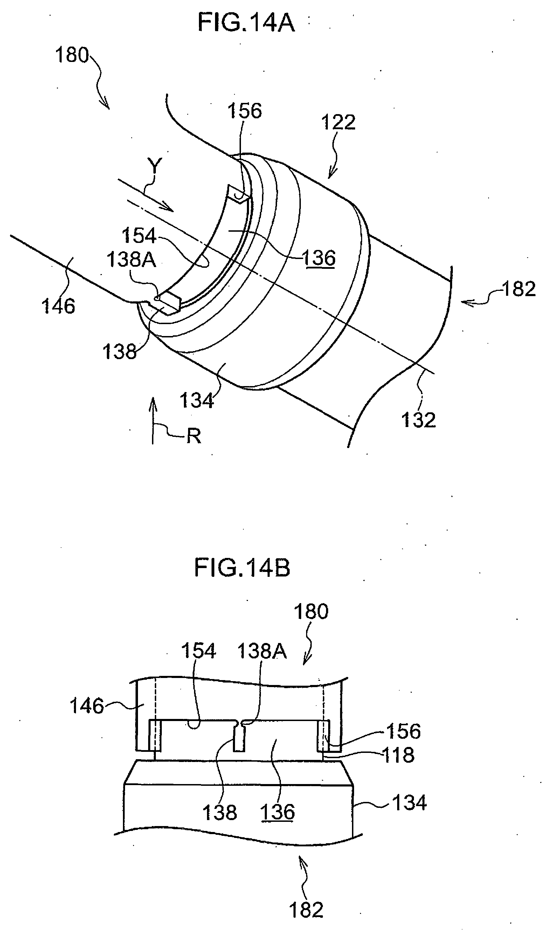

As shown in the external perspective view of a fitting structure illustrated in Fig. 14A, a notch 136 is formed in an end portion of the outer tube 146 of the first pipe 180. Fig. 14B is a diagram as viewed from the arrow R direction illustrated in Fig. 14A.

The notch 136 is formed as a notch in an end portion on the connection portion 122 side of the outer tube 146. The notch 136 is configured of sufficient size to insert a pressing member for releasing the connection of the claw member 129 for connecting the tube portion 120. Explanation is given later regarding the pressing member. The notch 136 includes a circumferential direction end face 154 cut along the circumferential direction, and an axial direction end face 156 cut along the axial line 132 direction. The inner pipe 118 is exposed at the interior of the notch 136.

A rib 138 projects out parallel to the axial line 132 from a substantially central position on the circumferential direction end face 154 of the notch 136. The rib 138 is formed in a plate shape with a length in the axial line 132 direction substantially the same as the length of the notch 136. A joining portion 138A of the rib 138 to the circumferential direction end face 154 is formed where the plate thickness is thinned to enable the rib 138 to be easily cut off

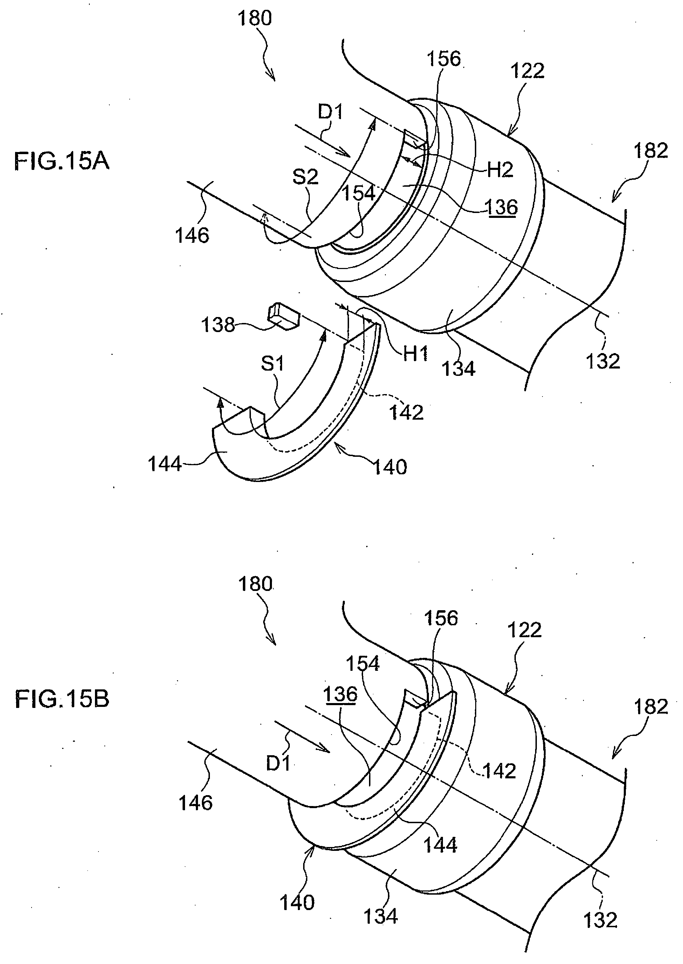

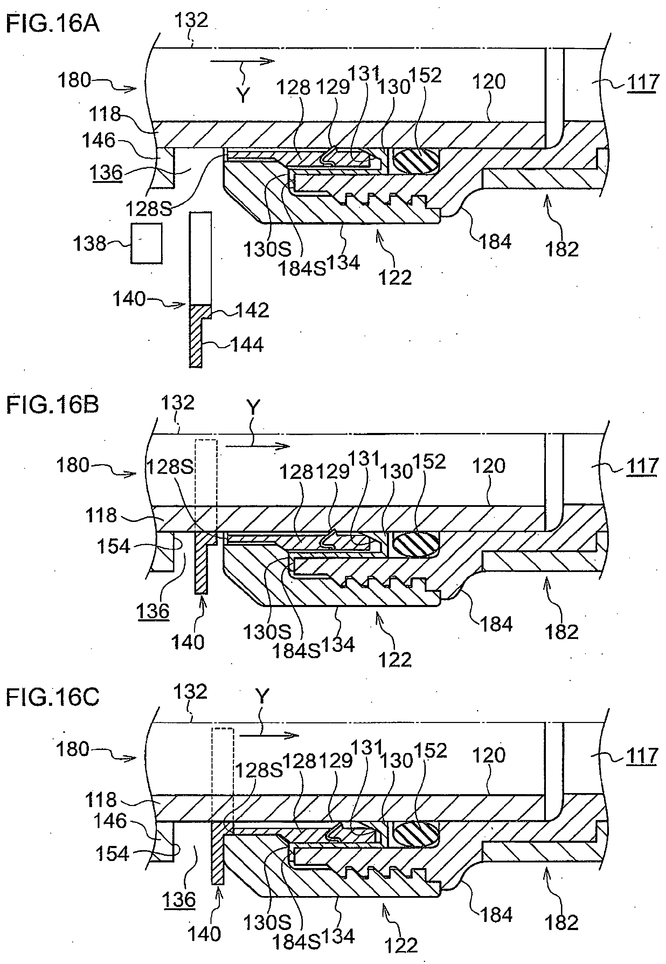

According to the configuration of the present exemplary embodiment, the first pipe 180 and the second pipe 182 connected by the connection portion 122 can be separated by the following procedure.
As shown in the separation procedure illustrated in Fig. 15 and Fig. 16, a dedicated pressing member 140 is employed to separate the first pipe 180 and the second pipe 182.

The pressing member 140 includes a curved portion 142 with a curved face that covers the outer peripheral face of the tube portion 120 over substantially half the circumference (length S1 around the curved face). The axial line 132 direction length of the curved portion 142 is denoted H1. The pressing member 140 also includes a flange portion 144 that bends around from an end portion of the curved portion 142 along the radial direction. The flange portion 144 serves as a pinched portion when the curved portion 142 is being inserted.

The notch 136 is formed by notching a portion of the tube portion 120 end of the outer tube 146 such that the circumferential direction length S2 of the notch 136 is longer than the circumferential direction length S1 of the pressing member 140 in the curved portion 142 circumferential direction, and the length H2 of the notch 136 in the axial line 132 direction is greater than the length H1 of the curved portion 142. The curved portion 142 of the pressing member 140 can accordingly be inserted into the notch 136 such that the curved portion 142 makes contact with the surface of the notch 136.
The rib 138 projects out from the notch 136. The rib 138 projects out at a substantially central portion of the circumferential direction end face 154. The separation distance from the side face of the rib 138 to the axial direction end faces 156 of the notch 136 is accordingly less than the circumferential direction width S1 of the curved portion 142. As a result the curved portion (plate portion) 142 of the pressing member 140 cannot be inserted into the gap of the notch 136 up to the rib 138.

The separation procedure is hence to first cut off the rib 138 provided to the notch 136 and insert the pressing member 140 into the notch 136 (see Fig. 15A, Fig. 16A and Fig. 16B). Cutting off the rib 138 can be easily accomplished at the position of the joining portion 138A since the joining portion 138A is made thinner than the outer tube 146 of the rib 138.

The pressing member 140 is then moved along the axial direction of the tube portion 120. Namely, the curved portion 142 is inserted between the cap 134 and the tube portion 120, so as to press the end portion 1285 of the collet 128 in the arrow Y direction along the surface of the inner pipe 118 (see Fig. 15B and 16C).

The collet 128 can accordingly be moved in the arrow Y direction. The end portions 128E of the collet 128 ride up the sloping portion 131 of the support ring 130 due to the collet 128 being moved as described above. The diameter of the end portions 128E of the collet 128 and the claw member 129 is expanded, thereby releasing the retention performed by the claw member 129.
As a result, retention of the collet 128 provided to connection means of the second pipe 182 is released, and the first pipe 180 and the second pipe 182 can be separated from each other.

As explained above, according to the present exemplary embodiment, the connected first pipe 180 and second pipe 182 can be disassembled, for example on site, and reassembled. In order to perform such disassembly the rib 138 provided to the notch 136 needs to be cut off, and so when the rib 138 has been cut off this can serve as evidence that the first pipe 180 and the second pipe 182 have been separated.
Since signs of plastic deformation in the joining portion to the outer tube 146 remain when the rib 138 is deformed to a great extent without actually cutting the rib 138 off, such evidence can serve as evidence that the first pipe 180 and the second pipe 182 have been separated.

In the present exemplary embodiment, explanation has been given of a case in which the first pipe 180 is a double tube construction of the inner pipe 118 and the outer tube 146. However there is no limitation thereto and a three or more multi-tube construction provided with an intermediate tube between the inner pipe 118 and the outer tube 146 may be employed. The single tube configuration may also be employed with integrally molded inner pipe 118 and outer tube 146. Similar advantageous effects can be obtained thereby to those of the double tube construction.

### Second exemplary Embodiment

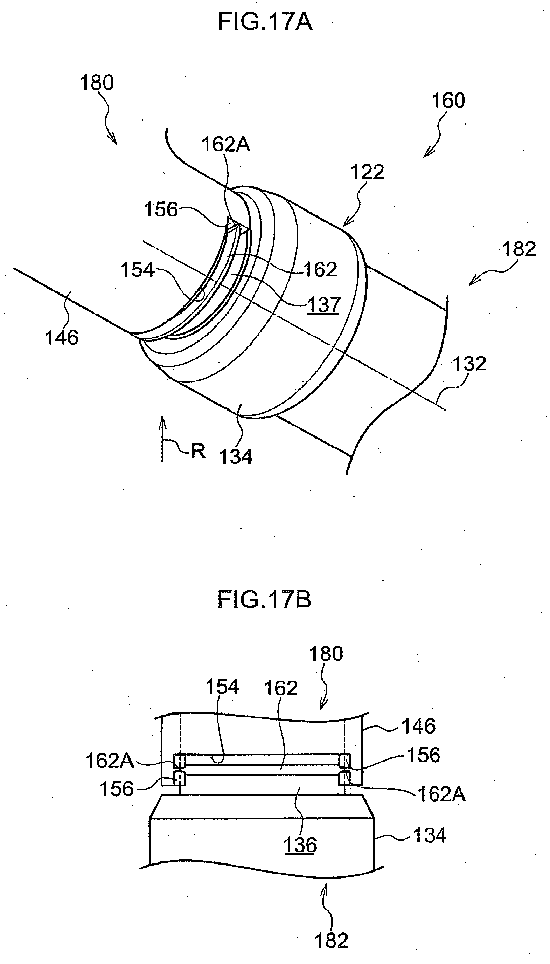

As shown in Fig. 17, a fitting structure 160 according to a second exemplary embodiment differs from the fitting structure 110 of the first exemplary embodiment in the configuration of the notch. Explanation focuses on the points of difference.

The fitting structure 160 includes a first pipe 180 and a second pipe 182, and the first pipe 180 and the second pipe 182 are connected together at a connection portion 122. A notch 137 of substantially the same dimensions to that of the notch 136 explained in the first exemplary embodiment is provided to the first pipe 180 in a similar position to the notch 136. A rib 162 projects out from a first axial direction end face 157 of the notch 137 towards the second axial direction end face 157 (facing along the circumferential direction).

The rib 162 is formed in a flat plate shape with similar radial direction height dimension to that of the outer tube 146 so as to cover the outer peripheral face of the inner pipe 118. The rib 162 is thinned in plate thickness at a joining portion 162A to the axial direction end face 156, enabling the rib 162 to be cut off easily. The rib 162 is provided in the vicinity of an axial direction central portion of the end face 156, and a gap portion between the rib 162 and the notch 136 is made smaller than the axial direction length H1 of the pressing member 140 explained in the first exemplary embodiment, such that the curved portion 142 of the pressing member 140 cannot be inserted.
One end portion of the rib 162 may be configured with a length so as to end part-way along before reaching the second axial direction end face 157.

According to such a configuration, the rib 162 must be cut off from the notch 137 in order to insert the curved portion 142 of the pressing member 140 described in the first exemplary embodiment into the notch 137. As a result when the rib 162 has been cut off this can be employed as evidence that the first pipe 180 has been separated.
Other parts of the configuration are similar to those of the first exemplary embodiment and further explanation thereof is omitted.

### Third exemplary Embodiment

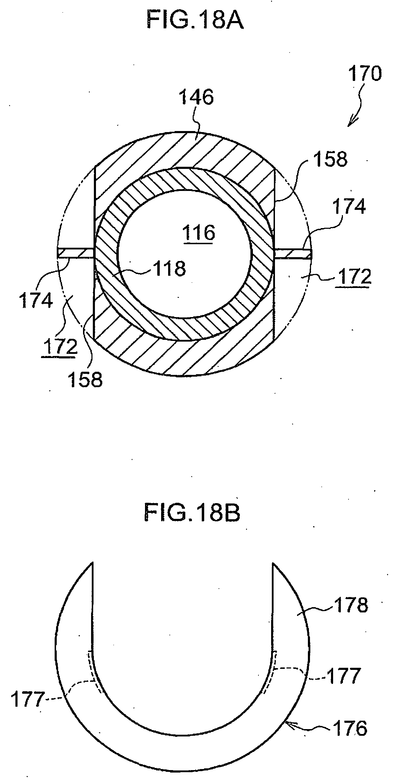

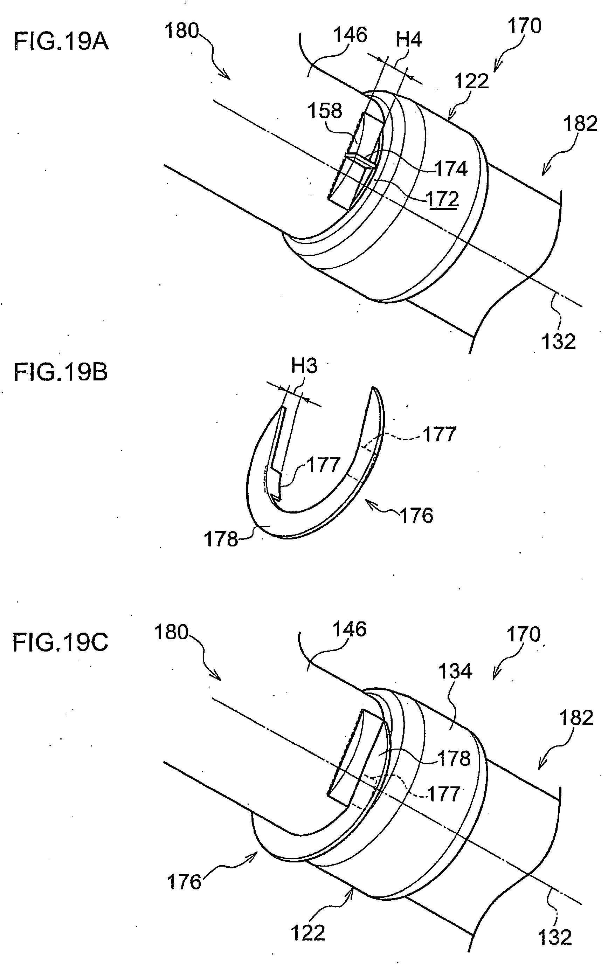

A fitting structure 170 according to a third exemplary embodiment, as shown in the cross-section of Fig. 18A and the perspective views of Fig. 19A and Fig. 19C, differs from the fitting structure 110 of the first exemplary embodiment in the configuration of the notch. Explanation focusses on the points of difference.

The fitting structure 170 includes a first pipe 180 and a second pipe 182, and the first pipe 180 and the second pipe 182 are connected together by a connection portion 122. A notch 172 is provided to the first pipe 180. Fig. 18A is a cross-section illustrating a section taken in a direction orthogonal to the axial line 132 as the position of the notch 172, and Fig. 18B is a plan view of a pressing member. Fig. 19A is a perspective view of a notch, Fig. 19B is a perspective view of a pressing member, and Fig. 19C is a diagram of a state in which a pressing member has been inserted into a notch.

The notch 172 is formed by removing the outer tube 146 of the first pipe 180 from two sides along a tangent 158 to the inner pipe 118 as far as the outer peripheral face of the inner pipe 118. The notch 172 can thereby be formed in two locations, facing each other with the inner pipe 118 in between. A width dimension H4 of the notch 172 is larger than an axial line direction length H3 (see Fig. 19B) of curved portions 177 of a U-shaped pressing member 176, described later.
Two ribs 174 project out from the end faces of the outer tube 146 of the notch 172 along respective axial line 132 directions.

The pressing member 176 includes two curved portions 177 provided as faces curving around the outer peripheral face of the tube portion 120. A flange portion 178 is provided to the curved portions 177 bending out in the radial direction from each end portion of the curved portions 177. End portions of the flange portion 178 extend along the notch 172 so as to integrate the pressing member 176 into a U-shape in plan view.
The pressing member 176 is inserted into the notches 172 when the rib 174 has been removed, and the curved portion 177 is inserted between the cap 134 and the inner pipe 118 explained in the first exemplary embodiment, pushing down the collet 128. The first pipe 180 and the second pipe 182 can accordingly be separated from each other.

In such a configuration the ribs 174 needs to be removed in order to insert the pressing member 176 into the notches 172. When the ribs 174 have been removed this can serve as evidence that the first pipe and the second pipe have been separated.
Other parts of the configuration are similar to those of the first exemplary embodiment and further explanation is omitted.

### Fourth exemplary Embodiment

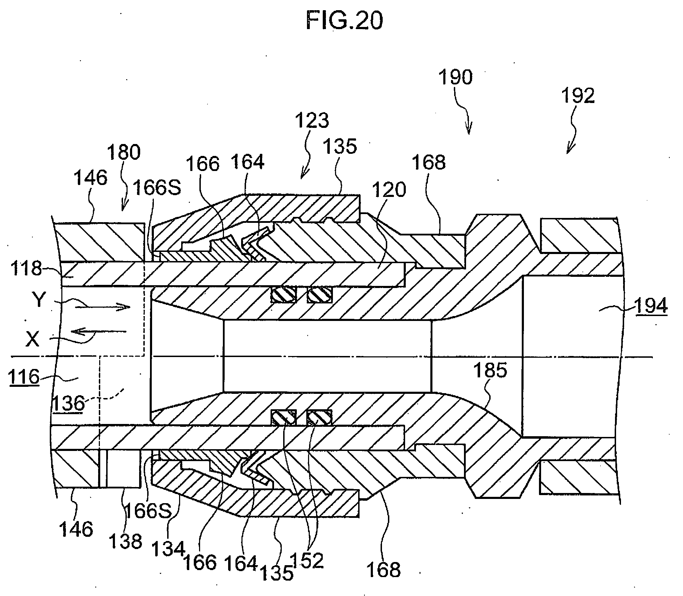

As shown in the cross-section illustrated in Fig. 20, a fitting structure 190 of a fourth exemplary embodiment differs from the first exemplary embodiment in the configuration of the connection portion to the fitting structure 110. Explanation focusses on the points of difference.

Fig. 20 illustrates a connected state. The fitting structure 190 includes a first pipe 180 and a third pipe 192, and the first pipe 180 and the third pipe 192 are connected together by a connection portion 123 with one-touch connection. The first pipe 180 has already been described in the first exemplary embodiment and further explanation is omitted.

The third pipe 192 includes an internal third flow path 194, and the connection portion 123 is provided at the leading end of the third pipe 192. A reduced diameter portion 185 where the tube diameter narrows is provided to the leading end of the third pipe 192, and the connection portion 123 is configured to utilize the reduced diameter portion 185.
A tube portion 120 of the first pipe 180 as described in the first exemplary embodiment is fitted over the outside of the reduced diameter portion 185. O-rings 152 are provided between the reduced diameter portion 185 and the tube portion 120 to prevent water leakage. A first flow path 116 of the first pipe 180 such as described in the first exemplary embodiment and a third flow path 194 are accordingly in communication with each other.

The connection portion 123 is configured from two components, a circular ring shaped retention ring 164 and an opening ring 166, dividing the collet 128 of the connection portion 122 as described in the first exemplary embodiment. The retention ring 164 is formed such that in cross-section a central portion folds back on itself at an acute angle, and the inner peripheral face side of the retention ring 164 slopes in the arrow Y direction. The leading end of the retention ring 164 is in contact with the outer peripheral face of the tube portion 120. The tube portion 120 is accordingly retained by the leading end of the retention ring 164, and the tube portion 120 is prevented from coming out in the arrow X direction.

The opening ring 166 is formed in a circular cylindrical shape, provided to the side face on the insertion opening side of the retention ring 164 (the arrow X direction side). The end portion on the retention ring 164 side of the opening ring 166 includes a sloping portion that makes contact with a sloping face of the retention ring 164. A transparent cover 168 is provided on the arrow Y direction side of the retention ring 164, surrounding the tube portion 120 and the reduced diameter portion 185. In this state the sloping portion at the leading end of the transparent cover 168 and a sloping portion of the retention ring 164 make contact with each other.
A cap 135 is also provided to surround the outer periphery of the transparent cover 168, the retention ring 164 and the opening ring 166. Movement of the transparent cover 168, the retention ring 164 and the opening ring 166 in the radial direction is thereby restricted.

According to the configuration described above, the retention ring 164 can move along the sloping portion at the leading end of the transparent cover 168 by a leading end 166S of the opening ring 166 being moved by the pressing member in the arrow Y direction. The diameter of the retention ring 164 thereby expands. As a result retention of the tube portion 120 by the retention ring 164 is released, and it becomes possible to remove the tube portion 120.
Other parts of the configuration are similar to those of the first exemplary embodiment and further explanation is omitted.

### Fifth exemplary Embodiment

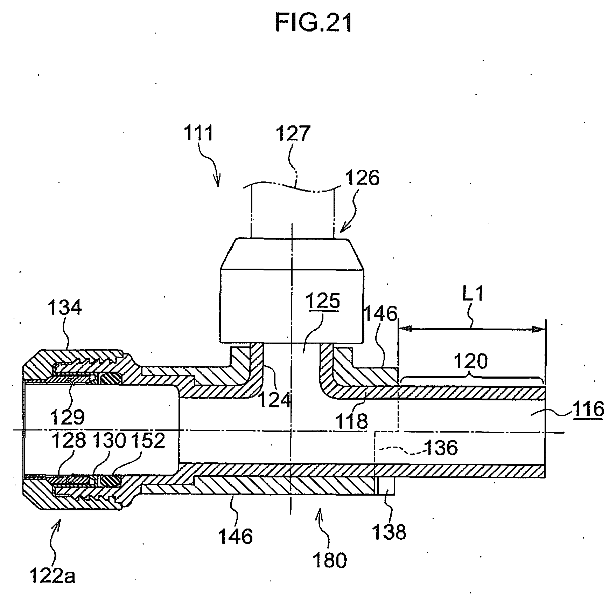

As shown in Fig. 21, a header unit 111 according to a fifth exemplary embodiment includes a first pipe 180 as described in the first exemplary embodiment. The first pipe 180 is a double tube construction configured by an inner pipe 118 formed with an internal first flow path 116 and outer tube 146 surrounding the inner pipe 118.

A connection tube portion 120 where the outer tube 146 is removed over a width L1 is formed at a portion at a first end of the first pipe 180, and a connection portion 122a for one-touch connection to a tube portion, not shown in the drawings, fitting over the outside is provided to a portion at the second end of the first pipe 180.
The connection portion 122a is configured similarly to the connection portion 122 described in the first exemplary embodiment and further explanation is omitted.

A branch pipe (branch opening) 124 provided with a branch flow path 125 in communication with the first flow path 116 projects out in a radial direction from the peripheral wall of the inner pipe 118 of the first pipe 180. A connection portion 126 for one-touch connection of the branch pipe 124 and a pipe 127 is provided to a leading end of the branch pipe 124.

According to the configuration described above, a pipe layout header provided with plural branch flow paths can be provided by connecting the tube portion 120 of the header unit 111 to the connection portion of a second header unit, not shown in the drawings.
A pipe layout header provided with plural branch flow paths can also be provided by connecting the tube portion of the second header unit, not shown in the drawings, to the connection portion 122a of the header unit 111.

Note that the notch 136 and the rib 138 of the header unit 111 are described for a case where the notch 136 and the rib 138 as described in the first exemplary embodiment are employed. However, there is no limitation thereto, and the notch 137 and the rib 162 described in the second exemplary embodiment may be employed, or the notch 172 and the rib 174 described in the third exemplary embodiment may also be employed.
Explanation has further been given of a case in which the connection portion 122 described in the first exemplary embodiment is employed as connection means. However there is no limitation thereto, and the connection portion 123 described in the fourth exemplary embodiment may also be employed.

### Sixth exemplary Embodiment

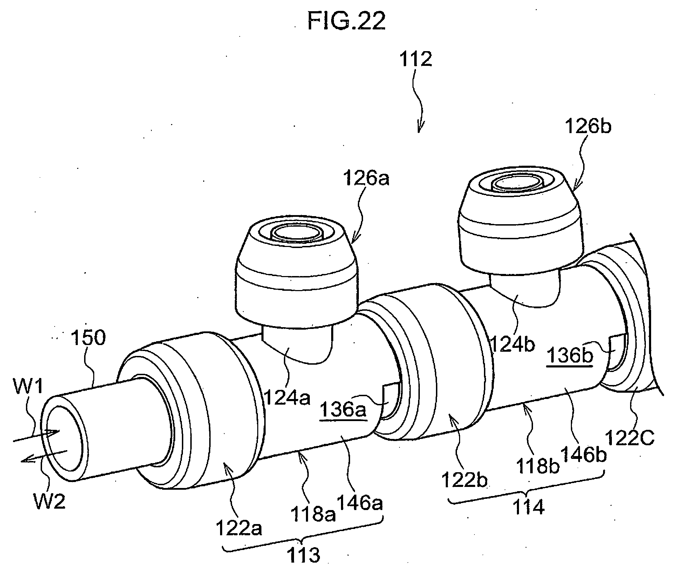

As shown in the perspective view of Fig. 22, a pipe layout header 112 according to a sixth exemplary embodiment of the present invention is configured by connecting a first header unit 113 and a second header unit 114 together with a connection portion 122b.

Both the first header unit 113 and the second header unit 114 are of similar configuration to the header unit 111 described in the fifth exemplary embodiment. Explanation focuses on the connection portion. For simplicity, explanation is given with portions relating to the first header unit 113 appended with the letter a, and portions relating to the second header unit 114 appended with the letter b.

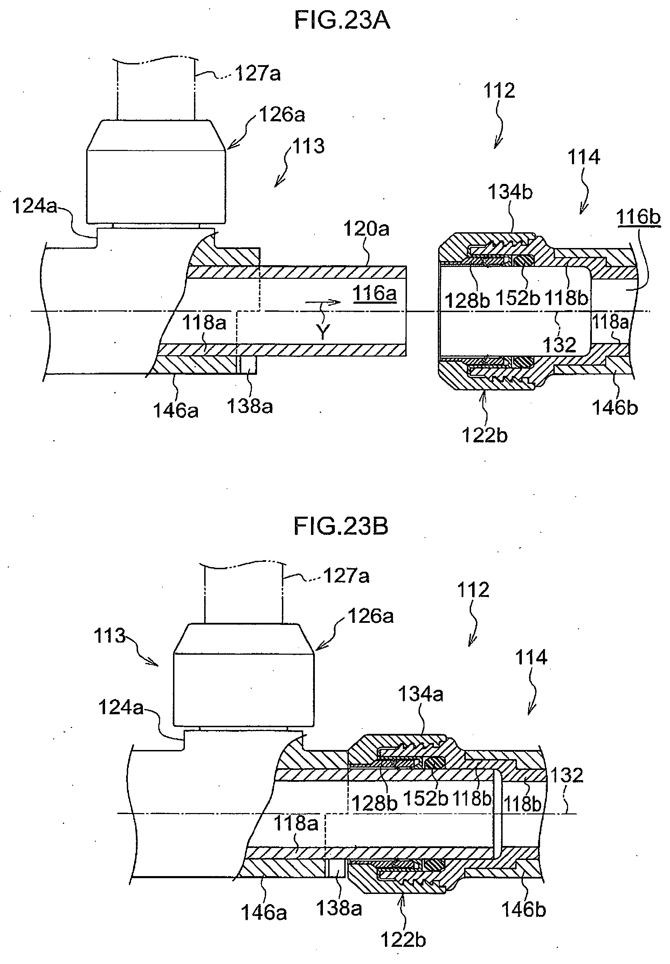

As shown in Fig. 23, in assembly of the pipe layout header 112 connection is made by inserting a tube portion 120a of the first header unit 113 into a connection portion 122b of the second header unit 114.
Note that the number of branch pipes 124 increases according to the number of pipe members 127a to be connected, and other header units, not shown in the drawings, may be configured simply by connecting together the required number of branch pipes 124 using the method described above.

A pipe 150, connected to for example a heater, not shown in the drawings, is inserted and fixed to the connection portion 122a of the first header unit 113. The pipe layout header 112 and the pipe 150 can accordingly communicate with each other and hot or cold water can be made to flow in the directions of the arrow W1 or the arrow W2.
When there is a bend at the connection portion 122a the connection portion 122a may also be connected to an elbow base, not shown in the drawings, formed with a bent portion provided with a tube portion at an end portion of the bent portion.

To release connection of the pipe layout header 112, a rib 138a is removed from a notch 136a on the first header unit 113 and the pressing member 140 described in the first exemplary embodiment is inserted. Connection is thereby released, and the first header unit 113 and the second header unit 114 can be separated.
Since it is necessary to remove the rib 138a provided to the notch 136a in order to insert the pressing member 140, if the rib 168a has been removed, this can serve as evidence that the first header unit 113 and the second header unit 114 have been separated.

In cases where the rib 138a is greatly deformed even though the rib 138a has not actually been removed, since signs of plastic deformation in the joining portion to the outer tube 146a remain, this can still serve as evidence that the first header unit 113 and the second header unit 114 have been separated in such cases too.

Explanation has been given of a case in which both the notches 136a, 136b and the rib 138a, 138b of the first header unit 113 and the second header unit 114 employ the notch 136 and the rib 138 described in the first exemplary embodiment. However, there is no limitation thereto, and the notch 137 and the rib 162 described in the second exemplary embodiment may be employed, or the notch 172 and the rib 174 described in the third exemplary embodiment may also be employed.

Explanation has further been given of a case in which the connection portion 122 described in the first exemplary embodiment is employed as connection means. However, there is no limitation thereto, and the connection portion 123 described in the fourth exemplary embodiment may also be employed. Any fitting in which connection can be released by inserting the pressing member 140 or the pressing member 176 may employed as a fitting.

## Claims

1. A fitting structure (110) comprising:
a first tube body (180) configured with a multilayer construction including an inner tube (118) formed with an internal first flow path (116) and an outer tube (146) surrounding the inner tube (118), and including a connection tube portion (120) for use in connection provided at a first end portion of the first tube body (180);
a second tube body (182) equipped with an internal second flow path (117), and provided with connection means (122) connected to the connection tube portion (120) that has been inserted into an end portion in order to communicate the first flow path (116) and the second flow path (117);
**characterized in that**
the outer tube (146) is removed from the inner tube (118) in the connection tube portion (120); and
a notch (136, 137, 172) is formed where the outer tube (146) facing the second tube body (182) has been removed, whereby, if a tool (140) is inserted into the notch (136, 137,172) and moved along the inner tube (118), the tool (140)may release connection to the connection means; and
restriction means is provided (138, 138a, 162, 174) that projects out from the outer tube (146) towards the notch (136, 137,172), is capable of being removed, and prevents the tool (140) from being inserted.

2. A fitting structure (110) according to claim 1, wherein the restriction means (138) projects out from an end face (154) of the notch (136) along the first tube body axial line direction.

3. A fitting structure (110) according to claim 1, wherein the restriction means (162) projects out from an end face of the notch (137) along the first tube body (180) circumferential direction.

4. A fitting structure (110) according to claim 1, wherein:
the notch (172) is formed by removing the outer tube (146) from both sides along a tangent to the inner tube (118) as far as the outer peripheral face of the inner tube (118); and
the restriction means (174) projects out at respective end faces of the notch (172) along the first tube body (180) axial line direction.

5. A pipe fitting comprising:
a tube body of multi-layer construction comprising an inner tube (118) formed with an internal flow path and an outer tube (146) surrounding the inner tube (118), first connection means provided at a first end portion of the tube body for connecting a first connection tube portion (120) that has been inserted from outside, and a second connection tube portion (120) for connection provided at a second end portion of the tube body, and a branch tube body projecting out in a radial direction from a peripheral wall of the inner tube (118) and equipped with a branch flow path in communication with the flow path; and **characterized in that**
the outer tube (146) is removed from the inner tube (118) in the connection tube portion (120);
a notch (136, 137,172) is formed by removing the outer tube (146) on the second end side such that when the second connection tube portion (120) has been connected to an external second connection means, if a tool (140) is inserted and moved along the inner tube (118), the tool may release connection to the second connection means; and
restriction means (138, 138a, 162, 174) that projects from the outer tube (146) towards the notch (136, 137,172) and is capable of being removed, and prevents insertion of the tool (140).

6. A pipe fitting according to claim 5, wherein the restriction means (138) projects out from an end face of the notch (136) along an axial line direction of the tube body.

7. A pipe fitting according to claim 5, wherein the restriction means (162) projects out from an end face of the notch (137) along the circumferential direction of the tube body.

8. A pipe fitting according to claim 5, wherein:
the notch (172) is formed by removing the outer tube (146) from both sides along a tangent to the inner tube (118) as far as the outer peripheral face of the inner tube (118); and
the restriction means (174) projects out at respective end faces of the notch (172) along the axial line direction of the tube body.

9. A pipe layout header (112) comprising:
a first pipe fitting (113) according to Claim 5, comprising an inner tube (118) formed with the internal first flow path (116), the first connection means (122b) being provided at a first end portion of the first pipe fitting (113) for connecting a first connection tube portion (120a) that has been inserted from outside, , and a branch tube body (126) projecting out in a radial direction from a peripheral wall of the inner tube (118) and equipped with a branch flow path in communication with the first flow path (116);
a second pipe fitting (114) according to claim 5, comprising an inner tube (118) formed with the internal second flow path (117), the second connection means (122a) being provided at a first end portion of the second pipe fitting (114) and connected to the second connection tube portion (120a), a third connection portion formed at a second end portion of the second pipe fitting (114) where the outer tube (146b) is removed, and a branch tube body(126b) projecting out in a radial direction from a peripheral wall of the inner tube (118) and equipped with a branch flow path in communication with the second flow path (117);
a notch (136a, 136b) is formed by removing the outer tube (146a, 146b) of the first pipe fitting (113), whereby, if a tool (140) is inserted into the notch (136a, 136b) and moved along the inner tube (118), the tool (140) may release connection of the second connection means; and
restriction means (138a) that projects from the outer tube (146) towards the notch (136a, 136b), is capable of being removed, and prevents insertion of the tool (140).

10. A pipe layout header according to claim 9, wherein the restriction means (138a) projects out from an end face of the notch (136a, 136b) along the axial line direction of the first pipe fitting.

11. A pipe layout header according to claim 9, wherein the restriction means projects out from an end face of the notch along the circumferential direction of the first pipe fitting.

12. A pipe layout header according to claim 9, wherein:
the notch is formed by removing the outer tube from both sides along a tangent to the inner tube as far as the outer peripheral face of the inner tube; and
the restriction means projects out at respective end faces of the notch along the axial line direction of the first pipe fitting.

## Patentansprüche

1. Fittingstruktur (110), die aufweist:
einen ersten Rohrkörper (180), der mit einer mehrschichtigen Konstruktion ausgebildet ist, einschließlich eines inneren Rohres (118), das mit einem inneren ersten Strömungsweg (116) ausgebildet ist, und eines äußeren Rohres (146), das das innere Rohr (118) umgibt, und einschließlich eines Verbindungsrohrabschnittes (120) für eine Verwendung bei einer Verbindung, die am ersten Endabschnitt des ersten Rohrkörpers (180) vorhanden ist;
einen zweiten Rohrkörper (182), der mit einem inneren zweiten Strömungsweg (117) ausgestattet ist und mit einem Verbindungsmittel (122) versehen ist, das mit dem Verbindungsrohrabschnitt (120) verbunden wird, der in einen Endabschnitt eingesetzt wurde, um eine Verbindung des ersten Strömungsweges (116) und des zweiten Strömungsweges (117) zu bewirken;
**dadurch gekennzeichnet, dass**
das äußere Rohr (146) aus dem inneren Rohr (118) im Verbindungsrohrabschnitt (120) entfernt wird; und
eine Kerbe (136, 137, 172) ausgebildet ist, wo das äußere Rohr (146), das zum zweiten Rohrkörper (182) hin liegt, entfernt wurde, wobei, wenn ein Werkzeug (140) in die Kerbe (136, 137, 172) eingesetzt und längs des inneren Rohres (118) bewegt wird, das Werkzeug (140) die Verbindung mit dem Verbindungsmittel freigeben kann; und
ein Begrenzungsmittel (138, 138a, 162, 174) vorhanden ist, das aus dem äußeren Rohr (146) in Richtung der Kerbe (136, 137, 172) herausragt, das entfernt werden kann und verhindert, dass das Werkzeug (140) eingesetzt wird.

2. Fittingstruktur (110) nach Anspruch 1, bei der das Begrenzungsmittel (138) aus einer Stirnfläche (154) der Kerbe (136) entlang der Richtung der axialen Linie des ersten Rohrkörpers herausragt.

3. Fittingstruktur (110) nach Anspruch 1, bei der das Begrenzungsmittel (162) aus einer Stirnfläche der Kerbe (137) entlang der Umfangsrichtung des ersten Rohrkörpers (180) herausragt.

4. Fittingstruktur (110) nach Anspruch 1, bei der:
die Kerbe (172) gebildet wird, indem das äußere Rohr (146) von beiden Seiten längs einer Tangente zum inneren Rohr (118) entfernt wird, so weit wie die äußere Umfangsfläche des inneren Rohres (118); und
das Begrenzungsmittel (174) an den entsprechenden Stirnflächen der Kerbe (172) längs der Richtung der axialen Linie des ersten Rohrkörpers (180) herausragt.

5. Rohrfitting, der aufweist:
einen Rohrkörper mit einer mehrschichtigen Konstruktion, der ein inneres Rohr (118), das mit einem inneren Strömungsweg ausgebildet ist, und ein äußeres Rohr (146) aufweist, das das innere Rohr (118) umgibt, wobei ein erstes Verbindungsmittel an einem ersten Endabschnitt des Rohrkörpers für ein Verbinden eines ersten Verbindungsrohrabschnittes (120), der von außen eingesetzt wurde, und eines zweites Verbindungsrohrabschnittes (120) für ein Verbinden vorhanden ist, der an einem zweiten Endabschnitt des Rohrkörpers vorhanden ist, und wobei ein Abzweigrohrkörper in einer radialen Richtung aus einer Umfangswand des inneren Rohres (118) herausragt und mit einem Abzweigströmungsweg in Verbindung mit dem Strömungsweg ausgestattet ist;
**dadurch gekennzeichnet, dass**
das äußere Rohr (146) aus dem inneren Rohr (118) im Verbindungsrohrabschnitt (120) entfernt wird;
eine Kerbe (136, 137, 172) gebildet wird, indem das äußere Rohr (146) auf der zweiten Endseite entfernt wird, so dass, wenn der zweite Verbindungsrohrabschnitt (120) mit einem externen zweiten Verbindungsmittel verbunden wurde, wenn ein Werkzeug (140) in das innere Rohr (118) eingesetzt und längs dieses bewegt wird, das Werkzeug die Verbindung mit dem zweiten Verbindungsmittel freigeben kann; und
ein Begrenzungsmittel (138, 138a, 162, 174) vorhanden ist, das aus dem äußeren Rohr (146) in Richtung der Kerbe (136, 137, 172) herausragt, das entfernt werden kann und das Einsetzen des Werkzeuges (140) verhindert.

6. Rohrfitting nach Anspruch 5, bei dem das Begrenzungsmittel (138) aus einer Stirnfläche der Kerbe (136) entlang einer Richtung der axialen Linie des Rohrkörpers herausragt.

7. Rohrfitting nach Anspruch 5, bei dem das Begrenzungsmittel (162) aus einer Stirnfläche der Kerbe (137) entlang der Umfangsrichtung des Rohrkörpers herausragt.

8. Rohrfitting nach Anspruch 5, bei dem:
die Kerbe (172) gebildet wird, indem das äußere Rohr (146) von beiden Seiten entlang einer Tangente zum inneren Rohr (118) entfernt wird, so weit wie die äußere Umfangsfläche des inneren Rohres (118); und
das Begrenzungsmittel (174) an den jeweiligen Stirnflächen der Kerbe (172) entlang der Richtung der axialen Linie des Rohrkörpers herausragt.

9. Rohrauslegungskopf (112), der aufweist:
einen ersten Rohrfitting (113) nach Anspruch 5, der ein inneres Rohr (118), das mit dem inneren ersten Strömungsweg (116) ausgebildet ist, das erste Verbindungsmittel (122b), das an einem ersten Endabschnitt des ersten Rohrfittings (113) für das Verbinden eines ersten Verbindungsrohrabschnittes (120a) vorhanden ist, der von außen eingesetzt wurde, und einen Abzweigrohrkörper (126) aufweist, der in einer radialen Richtung aus einer Umfangswand des inneren Rohres (118) herausragt und mit einem Abzweigströmungsweg in Verbindung mit dem ersten Strömungsweg (116) ausgestattet ist;
einen zweiten Rohrfitting (114) nach Anspruch 5, der ein inneres Rohr (118), das mit dem inneren zweiten Strömungsweg (117) ausgebildet ist, das zweite Verbindungsmittel (122a), das an einem ersten Endabschnitt des zweiten Rohrfittings (114) und verbunden mit dem zweiten Verbindungsrohrabschnitt (120a) vorhanden ist, einen dritten Verbindungsabschnitt, der an einem zweiten Endabschnitt des zweiten Rohrfittings (114) ausgebildet ist, wo das äußere Rohr (146b) entfernt ist, und einen Abzweigrohrkörper (126b) aufweist, der in einer radialen Richtung aus einer Umfangswand des inneren Rohres (118) herausragt und mit einem Abzweigströmungsweg in Verbindung mit dem zweiten Strömungsweg (117) ausgestattet ist;
eine Kerbe (136a, 136b), ausgebildet durch Entfernen des äußeren Rohres (146a, 146b) des ersten Rohrfittings (113), wobei, wenn ein Werkzeug (140) in die Kerbe (136a, 136b) eingesetzt und längs des inneren Rohres (118) bewegt wird, das Werkzeug (140) die Verbindung des zweiten Verbindungsmittels freigeben kann; und
ein Begrenzungsmittel (138a), das aus dem äußeren Rohr (146) in Richtung der Kerbe (136a, 136b) herausragt, entfernt werden kann und das Einsetzen des Werkzeuges (140) verhindert.

10. Rohrauslegungskopf nach Anspruch 9, bei dem das Begrenzungsmittel (138a) aus einer Stirnfläche der Kerbe (136a, 136b) entlang der Richtung der axialen Linie des ersten Rohrfittings herausragt.

11. Rohrauslegungskopf nach Anspruch 9, bei dem das Begrenzungsmittel aus einer Stirnfläche der Kerbe entlang der Umfangsrichtung des ersten Rohrfittings herausragt.

12. Rohrauslegungskopf nach Anspruch 9, bei dem:
die Kerbe gebildet wird, indem das äußere Rohr von beiden Seiten längs einer Tangente zum inneren Rohr entfernt wird, so weit wie die äußere Umfangsfläche des inneren Rohres; und
das Begrenzungsmittel an den jeweiligen Stirnflächen der Kerbe entlang der Richtung der axialen Linie des ersten Rohrfittings herausragt.

## Revendications

1. Structure de raccord (110) comprenant :
un premier corps de tube (180) présentant une construction multicouche comportant un tube intérieur (118) présentant un premier passage d'écoulement interne (116) et un tube extérieur (146) entourant le tube intérieur (118), et comportant une partie de tube de liaison (120) pour effectuer une liaison prévue au niveau d'une première partie terminale du premier corps de tube (180) ;
un second corps de tube (182) pourvu d'un second passage d'écoulement interne (117) et équipé d'un moyen de liaison (122) relié à la partie de tube de liaison (120) qui a été introduite dans une partie terminale afin d'établir une communication entre le premier passage d'écoulement (116) et le second passage d'écoulement (117) ;
**caractérisé en ce que**
le tube extérieur (146) est retiré du tube intérieur (118) dans la partie de tube de liaison (120) ; et
un creux (136, 137, 172) est formé à l'endroit où le tube extérieur (146) en vis-à-vis du second corps de tube (182) a été retiré, moyennant quoi, si un outil (140) est introduit dans le creux (136, 137, 172) et déplacé le long du tube intérieur (118), l'outil (140) peut suspendre la liaison avec le moyen de liaison ; et
des moyens de restriction (138, 138a, 162, 174) sont prévus en faisant saillie à partir du tube extérieur (146) vers le creux (136, 137, 172), sont aptes à être retirés et empêchent l'insertion de l'outil (140).

2. Structure de raccord (110) selon la revendication 1, dans lequel le moyen de restriction (138) fait saillie à partir d'une face terminale (154) du creux (136) le long du sens linéaire axial du premier corps de tube.

3. Structure de raccord (110) selon la revendication 1, dans lequel le moyen de restriction (162) fait saillie à partir d'une face terminale du creux (137) le long du sens circonférentiel du premier corps de tube (180).

4. Structure de raccord (110) selon la revendication 1, dans lequel :
le creux (172) est formé en retirant le tube extérieur (146) des deux côtés le long d'une tangente au tube intérieur (118) jusqu'à la face périphérique extérieure du tube intérieur (118) ; et
le moyen de restriction (174) fait saillie au niveau de faces terminales respectives du creux (172) le long du sens linéaire axial du premier corps de tube (180).

5. Raccord de tuyau comprenant :
un corps de tube de construction multicouche comprenant un tube intérieur (118) présentant un passage d'écoulement interne et un tube extérieur (146) entourant le tube intérieur (118), un premier moyen de liaison prévu au niveau d'une première partie terminale du corps de tube pour relier une première partie de tube de liaison (120) qui a été introduite depuis l'extérieur, et une deuxième partie de tube de liaison (120) pour effectuer une liaison prévue au niveau d'une seconde partie terminale du corps de tube, et un corps de tube de ramification faisant saillie dans un sens radial à partir d'une paroi périphérique du tube intérieur (118) et pourvu d'un passage d'écoulement de ramification en communication avec le passage d'écoulement ;
**caractérisé en ce que**
le tube extérieur (146) est retiré du tube intérieur (118) dans la partie de tube de liaison (120) ;
un creux (136, 137, 172) est formé en retirant le tube extérieur (146) sur le second côté terminal de manière que, lorsque la deuxième partie de tube de liaison (120) a été reliée à un second moyen de liaison externe, si un outil (140) est introduit et déplacé le long du tube intérieur (118), l'outil peut suspendre la liaison avec le second moyen de liaison ; et
des moyens de restriction (138, 138a, 162, 174) qui font saillie à partir du tube extérieur (146) vers le creux (136, 137, 172), sont aptes à être retirés et empêchent l'introduction de l'outil (140).

6. Raccord de tuyau selon la revendication 5, dans lequel le moyen de restriction (138) fait saillie à partir d'une face terminale du creux (136) le long d'un sens linéaire axial du corps de tube.

7. Raccord de tuyau selon la revendication 5, dans lequel le moyen de restriction (162) fait saillie à partir d'une face terminale du creux (137) le long du sens circonférentiel du corps de tube.

8. Raccord de tuyau selon la revendication 5, dans lequel :
le creux (172) est formé en retirant le tube extérieur (146) des deux côtés le long d'une tangente au tube intérieur (118) jusqu'à la face périphérique extérieure du tube intérieur (118) ; et
le moyen de restriction (174) fait saillie au niveau de faces terminales respectives du creux (172) le long du sens linéaire axial du corps de tube.

9. Tête de disposition de tuyau (112) comprenant :
un premier raccord de tuyau (113) selon la revendication 5, comprenant un tube intérieur (118) présentant un premier passage d'écoulement interne (116), le premier moyen de liaison (122b) étant prévu au niveau d'une première partie terminale du premier raccord de tuyau (113) pour relier une première partie de tube de liaison (120a) qui a été introduite depuis l'extérieur, et un corps de tube de ramification (126) faisant saillie dans un sens radial à partir d'une paroi périphérique du tube intérieur (118) et pourvu d'un passage d'écoulement de ramification en communication avec le premier passage d'écoulement (116) ;
un second raccord de tuyau (114) selon la revendication 5, comprenant un tube intérieur (118) présentant le second passage d'écoulement interne (117), le second moyen de liaison (122a) étant prévu au niveau d'une première partie terminale du second raccord de tuyau (114) et relié à la deuxième partie de tube de liaison (120a), une troisième partie de liaison formée au niveau d'une seconde partie terminale du second raccord de tuyau (114) à l'endroit où le tube extérieur (146b) est retiré, et un corps de tube de ramification (126b) faisant saillie dans un sens radial à partir d'une paroi périphérique du tube intérieur (118) et pourvu d'un passage d'écoulement de ramification en communication avec le second passage d'écoulement (117) ;
un creux (136a, 136b) est foré en retirant le tube extérieur (146a, 146b) du premier raccord de tuyau (113), moyennant quoi, si un outil (140) est introduit dans le creux (136a, 136b) et déplacé le long du tube intérieur (118), l'outil (140) peut suspendre la liaison du second moyen de liaison ; et
un moyen de restriction (138a) qui fait saillie à partir du tube extérieur (146) vers le creux (136a, 136b), est apte à être retiré et empêche l'introduction de l'outil (140).

10. Tête de disposition de tuyau selon la revendication 9, dans lequel le moyen de restriction (138a) fait saillie à partir d'une face terminale du creux (136a, 136b) le long du sens linéaire axial du premier raccord de tuyau.

11. Tête de disposition de tuyau selon la revendication 9, dans lequel le moyen de restriction fait saillie à partir d'une face terminale du creux le long du sens circonférentiel du premier raccord de tuyau.

12. Tête de disposition de tuyau selon la revendication 9, dans lequel :
le creux est formé en retirant le tube extérieur des deux côtés le long d'une tangente au tube intérieur jusqu'à la face périphérique extérieure du tube intérieur ; et
le moyen de restriction fait saillie au niveau de faces terminales respectives du creux le long du sens linéaire axial du premier raccord de tuyau.
